# EUROPEAN PATENT APPLICATION

(11) **EP 2 544 285 A1**
(43) Date of publication of application: **09.01.2013**
(21) Application number: 11750361.5
(22) Date of filing: 28.02.2011
(51) Int. Cl.: H01M 8/04

(54) **FUEL-CELL POWER GENERATING SYSTEM**

(30) Priority: 01.03.2010 JP 2010043936
(71) Applicant: Panasonic Corporation, Kadoma-shi Osaka 571-8501 (JP)
(72) Inventor: KAKU, Hiroaki, 2-1-61, Shiromi, Chuo-ku, Osaka-shi, Osaka 540-6207 (JP); KATOU, Motomichi, 2-1-61, Shiromi, Chuo-ku, Osaka-shi, Osaka 540-6207 (JP); SHIMADA, Takanori, 2-1-61, Shiromi, Chuo-ku, Osaka-shi, Osaka 540-6207 (JP); TANAKA, Yoshikazu, 2-1-61, Shiromi, Chuo-ku, Osaka-shi, Osaka 540-6207 (JP)
(74) Representative: Grünecker, Kinkeldey, Stockmair & Schwanhäusser
(86) International application number: PCT/JP2011/001159
(87) International publication number: WO 2011/108248

(57) **Abstract**

A fuel cell power generation system 100 including: a measurement section 109 configured to measure an accumulated energized period; a calendar section 104 configured to specify a time and a date; a memory 106 having stored therein a matrix in which time-of-year segments which are defined by dividing a one-year period are arranged in rows, and energized period segments which are defined by dividing a target value of the accumulated energized period are arranged in columns, wherein the matrix stores, as elements, upper limit values of a power generation period per unit time of a fuel cell stack, and the upper limit values are set such that the sum of power generation periods calculated for all of the elements coincides with a pre-measured life period of the fuel cell stack; a calculation section 107 configured to apply the time and the date and the accumulated energized period to the matrix, and to determine an upper limit value of the power generation period per unit time; and an operation controller 110 configured to set, in consideration of at least a thermal demand from a demander, a plan for a power generation operation to be performed in each unit time within the range of the upper limit value, and to control the power generation operation of the fuel cell stack 101 based on the plan.

## Description

### Technical Field

The present invention relates to a fuel cell power generation system controlled based on an operation plan.

### Background Art

In recent years, research and development on household fuel cell power generation systems are more accelerated, aiming at facilitating the spread of such fuel cell power generation systems and business creation in the industry.

One of the challenges in order to realize the above objective is to further improve the durability of fuel cell power generation systems {e.g., realize durability that allows power supply from a main power source to a fuel cell system to be kept ON for 10 years (i.e., durability that allows a fuel cell system to be kept in a state of being able to generate power for 10 years); such durability is hereinafter referred to as "10-year durability"}. In order to realize excellent durability such as 10-year durability, various proposals have been made and analyses have been conducted on causes of deterioration in durability.

For example, Patent Literature 1, which is indicated below, proposes a fuel cell system (corresponding to a "fuel cell power generation system" of the present invention) which is intended to improve its durability by specifying a power generation period per day of the fuel cell to fall within a predetermined range. To be specific, an allowable operating period (see a "power generation period" of the present invention) of the fuel cell system is specified for each month so as to accommodate changes in thermal demand in respective months, and more specifically, to accommodate changes in thermal demand in respective days (see Fig. 3 of Patent Literature 1).

As another example, Patent Literature 2, which is indicated below, shows a co-generation system (corresponding to the "fuel cell power generation system" of the present invention) and discloses a finding that the power generation efficiency of a fuel cell stack included in the fuel cell power generation system decreases in accordance with an increase in its power generation period (i.e., the co-generation system degrades in accordance with an increase in the power generation period) (see Fig. 3 of Patent Literature 2). Patent Literature 2 also discloses that the heat recovery efficiency of the co-generation system increases in accordance with an increase in the power generation period while the power generation efficiency decreases in accordance with an increase in the power generation period. Patent Literature 2 discloses a configuration with which to determine the amount of power to be generated in accordance with such a decrease in the power generation efficiency and increase in the heat recovery efficiency.

### Citation List

### Patent Literature

PTL 1: Japanese Laid-Open Patent Application Publication No. 2007-323843 PTL 2: Japanese Laid-Open Patent Application Publication No. 2010-043936

### Summary of Invention

### Technical Problem

However, there is still room for improvement for the conventional technology including the above-described Patent Literatures 1 and 2 from the viewpoint of obtaining sufficient durability that is required by the installation location and/or installation area of the system (e.g., 10-year durability) while addressing, at least, a thermal demand from a demander.

To be more specific, Patent Literatures 1 and 2 disclose configurations that do not take into consideration how to set a power generation plan for each day (including a power generation period and a timing of performing power generation) within a one-year period in order to achieve a required target durability period (e.g., 10 years). Thus, there is room for improvement in this respect.

### Solution to Problem

In order to solve the above conventional problems, a fuel cell power generation system according to the present invention, which includes a fuel cell stack configured to generate power and which operates based on power supplied from a main power source for the entire system, includes: a measurement section configured to measure an accumulated energized period which is an accumulation of periods during which the power supply from the main power source is ON; a calendar section, having a clock function and a calendar function, configured to specify a time and a date at which the power supply from the main power source is ON; a memory having stored therein a matrix in which time-of-year segments which are defined by dividing a one-year period are arranged in rows, and energized period segments which are defined by dividing a target value of the accumulated energized period are arranged in columns, wherein the matrix stores, as elements, upper limit values of a power generation period per unit time of the fuel cell stack, and the upper limit values are set such that the sum of power generation periods calculated for all of the elements in the matrix coincides with a pre-measured life period of the fuel cell stack; a calculation section configured to apply actual measurement data of the time and the date specified by the calendar section and actual measurement data of the accumulated energized period measured by the measurement section to the matrix, and to determine an upper limit value of the power generation period per unit time; and an operation controller configured to set, in consideration of at least a thermal demand from a demander, a plan for a power generation operation to be performed in each unit time within the range of the upper limit value of the power generation period per unit time, the upper limit value having been determined by the calculation section, and to control the power generation operation of the fuel cell stack based on the plan.

This configuration makes it possible to obtain sufficient durability that is required by the installation location and/or installation area of the system (e.g., 10-year durability) while addressing, at least, a thermal demand from a demander.

### Advantageous Effects of Invention

As described above, the fuel cell power generation system according to the present invention determines an upper limit value of the power generation period per unit time (e.g., per day) of the fuel cell stack by using the matrix prestored in the memory, actual measurement data of a time and a date, and actual measurement data of the accumulated energized period measured by the measurement section. Moreover, the fuel cell power generation system sets, in consideration of at least a thermal demand from a demander, a plan for a power generation operation to be performed in a unit time (e.g., a day) within the range of the upper limit value of the power generation period, and can control the power generation operation of the fuel cell stack based on the plan.

As described above, in order to achieve a required target durability period (e.g., 10 years), the fuel cell power generation system according to the present invention divides and distributes the predetermined life period of the fuel cell stack into per-unit-time power generation periods (e.g., one unit time is a day). Each per-unit-time power generation period corresponds to a respective segment contained in a one-year period. For the per-unit-time power generation periods, the fuel cell power generation system can set, within the range of each per-unit-time power generation period, a unit-time power generation plan (e.g., a length of time of power generation and a timing of performing the power generation).

Thus, the fuel cell power generation system according to the present invention makes it possible to obtain sufficient durability that is required by the installation location and/or installation area of the system (e.g., 10-year durability) while addressing, at least, a thermal demand from a demander.

### Brief Description of Drawings

[Fig. 1] Fig. 1 is a block diagram showing a schematic configuration example of a fuel cell power generation system according to Embodiment 1.
[Fig. 2] Fig. 2 is a flowchart showing an example of a method for operating the fuel cell power generation system according to Embodiment 1.
[Fig. 3] Fig. 3 is an example of a matrix for a power generation period per unit time of the fuel cell power generation system according to Embodiment 1.
[Fig. 4] Fig. 4 is an example of a matrix for an integration coefficient for use in calculation of the power generation period per unit time of the fuel cell power generation system according to Embodiment 1.
[Fig. 5] Fig. 5 is a flowchart showing an example of the method for operating the fuel cell power generation system according to Embodiment 1.

### Description of Embodiments

A fuel cell power generation system according to a first aspect of the present invention includes a fuel cell stack configured to generate power and operates based on power supplied from a main power source for the entire system. The fuel cell power generation system includes: a measurement section configured to measure an accumulated energized period which is an accumulation of periods during which the power supply from the main power source is ON; a calendar section, having a clock function and a calendar function, configured to specify a time and a date at which the power supply from the main power source is ON; a memory having stored therein a matrix in which time-of-year segments which are defined by dividing a one-year period are arranged in rows, and energized period segments which are defined by dividing a target value of the accumulated energized period are arranged in columns, wherein the matrix stores, as elements, upper limit values of a power generation period per unit time of the fuel cell stack, and the upper limit values are set such that the sum of power generation periods calculated for all of the elements in the matrix coincides with a pre-measured life period of the fuel cell stack; a calculation section configured to apply actual measurement data of the time and the date specified by the calendar section and actual measurement data of the accumulated energized period measured by the measurement section to the matrix, and to determine an upper limit value of the power generation period per unit time; and an operation controller configured to set, in consideration of at least a thermal demand from a demander, a plan for a power generation operation to be performed in each unit time within the range of the upper limit value of the power generation period per unit time, the upper limit value having been determined by the calculation section, and to control the power generation operation of the fuel cell stack based on the plan.

This configuration makes it possible to obtain sufficient durability that is required by the installation location and/or installation area of the system (e.g., 10-year durability) while addressing, at least, a thermal demand from a demander.

The "main power source" refers to a power source which supplies, from the outside of the fuel cell power generation system, main power required to allow the fuel cell power generation system to operate. Examples of the main power source may include a commercial power source. It should be noted that even if, during power generation of the fuel cell, the generated power is used for operating the fuel cell power generation system, power necessary at the time of, for example, start-up and standby may still be supplied from an external power source. In such a case, the external power source may serve as the main power source.

The "target value of the accumulated energized period" refers to a durable period, of the fuel cell power generation system, that is required by the installation location and/or the installation area of the system. For example, the "target value of the accumulated energized period" refers to a target value of a period during which the power supply from the main power source of the fuel cell power generation system is kept ON (i.e., a target value of a period during which the fuel cell power generation system is kept in a state of being able to generate power). To be specific, the target value of the accumulated energized period may be set to 10 years (87600 hours), for example.

The "unit time" refers to a period with which to divide repeated operations of the fuel cell power generation system. To be specific, the unit time may be set to a day, a week, ten days, or a month, for example.

The "upper limit values of a power generation period per unit time" refer to upper limit values for the power generation period per unit time (e.g., per day), which are set in consideration of the pre-measured life of the fuel cell stack (i.e., in consideration of a power generation period during which the fuel cell stack is able to perform power generation with a predetermined power generation efficiency). In the present invention, the upper limit values of the power generation period per unit time are set such that the total power generation period becomes less than or equal to the life of the fuel cell stack. Specifically, for example, the upper limit values of the power generation period per unit time may be calculated while setting the total power generation period that reaches the life of the fuel cell stack to 40000, 50000, or 60000 hours.

At the time when the operation controller sets the plan in consideration of a thermal demand from a demander, the thermal demand may be automatically sent to the operation controller from the thermal demand measurement section, or may be inputted by an operator, for example.

A fuel cell power generation system according to a second aspect of the present invention is configured such that, particularly, in the fuel cell power generation system according to the first aspect, the upper limit values of the power generation period per unit time are set such that the longer the accumulated energized period, the less the upper limit values of the power generation period per unit time.

A fuel cell power generation system according to a third aspect of the present invention is configured such that, particularly, in the fuel cell power generation system according to the first or second aspect, the upper limit values of the power generation period per unit time are set such that the higher the thermal demand in a time-of-year segment within the one-year period, the greater the upper limit value of the power generation period per unit time in the time-of-year segment.

A fuel cell power generation system according to a fourth aspect of the present invention is configured such that, particularly, in the fuel cell power generation system according to the first or second aspect, the upper limit values of the power generation period per unit time are set such that the lower an average daily temperature in a time-of-year segment relative to the other time-of-year segments within the one-year period, the greater the upper limit value of the power generation period per unit time in the time-of-year segment.

A fuel cell power generation system according to a fifth aspect of the present invention is configured such that, particularly, the fuel cell power generation system according to any one of the first to fourth aspects includes a rewrite processing section configured to rewrite, based on temperature information about an installation location of the fuel cell power generation system, the upper limit values of the power generation period per unit time which are stored in the matrix.

A fuel cell power generation system according to a sixth aspect of the present invention is configured such that, particularly, the fuel cell power generation system according to any one of the first to fourth aspects includes: a plurality of prestored matrices associated with temperature information about an installation location of the fuel cell power generation system; and a selection processing section configured to make a selection from among the plurality of matrices, which are stored in the memory, based on the temperature information about the installation location.

A fuel cell power generation system according to a seventh aspect of the present invention is configured such that, particularly, in the fuel cell power generation system according to the fifth or sixth aspect, the temperature information contains at least one of the following pieces of information: installation location information prestored in the memory; average temperature information about the installation location; and temperature information detected by a temperature detector configured to detect an ambient temperature of the installation location.

A fuel cell power generation system according to an eighth aspect of the present invention is configured such that, particularly, the fuel cell power generation system according to any one of the first to seventh aspects includes a display configured to display a time of a power generation operation performed within an actual unit time, the time being determined in the plan for the power generation operation, which plan is set by the operation controller.

A fuel cell power generation system according to a ninth aspect of the present invention is configured such that, particularly, in the fuel cell power generation system according to any one of the first to eighth aspects, the measurement section, the memory, and the operation controller are configured to be supplied with power from a commercial power source, and the calendar section is configured to be supplied with power from a power supply unit that is independent of the commercial power source and the fuel cell stack.

Being "independent of the commercial power source and the fuel cell stack" means that the calendar section can be supplied with power from the power supply unit even if the power supply from the commercial power source is stopped and the power generation by the fuel cell stack is stopped. It should be noted that the calendar section may be configured to be supplied with power not only from the power supply unit but also from the commercial power source and/or the fuel cell stack.

A fuel cell power generation system operation method according to a tenth aspect of the present invention is a method for operating a fuel cell power generation system, in which an accumulated energized period is an accumulation of periods during which power supply from a main power source is ON. The method includes the steps of: dividing a one-year period to define time-of-year segments, dividing a target value of the accumulated energized period to define energized period segments, and presetting a matrix which is used for determining an upper limit value of a power generation period per unit time for each combination of the time-of-year segments and the energized period segments; specifying a time and a date at which the power supply from the main power source is ON; measuring the accumulated energized period; determining to which time-of-year segment the specified time and date belong and to which energized period segment the measured accumulated energized period belongs, and based on results of the determination and the matrix, determining an upper limit value of the power generation period per unit time; setting a plan for a power generation operation to be performed in each unit time within the range of the determined upper limit value of the power generation period per unit time; and operating the fuel cell system based on the set plan.

Hereinafter, embodiments of the present invention are described with reference to the drawings. It should be noted that the present invention is not limited by these embodiments.

### (Embodiment 1)

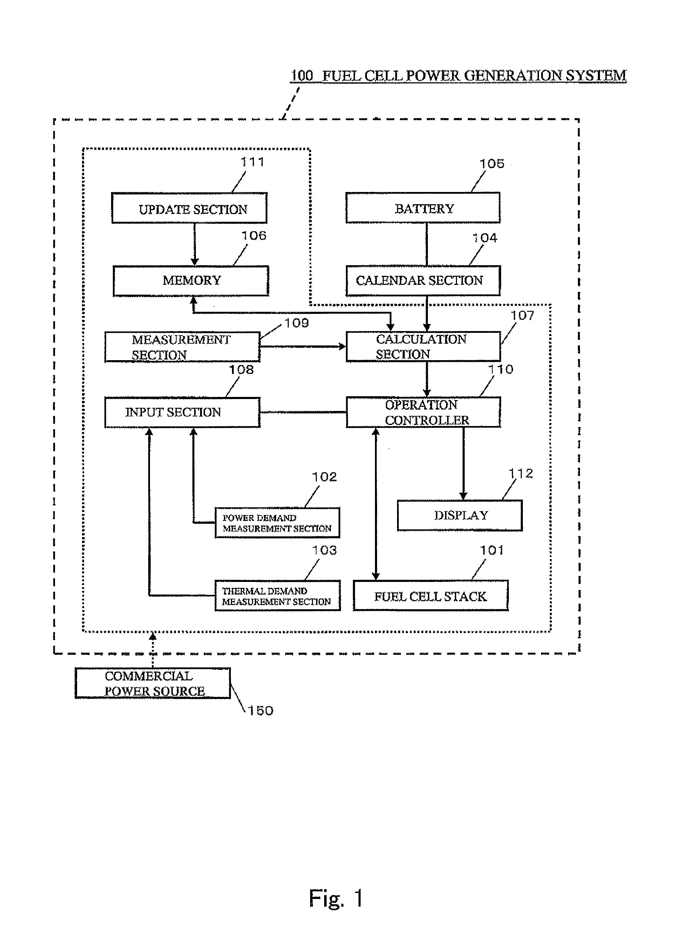

Fig. 1 is a block diagram showing a schematic configuration example of a fuel cell power generation system according to Embodiment 1.

As shown in Fig. 1, a fuel cell power generation system 100 of the present embodiment includes, at least, a fuel cell stack 101 configured to generate power, a measurement section 109, a calendar section 104, a memory 106, a calculation section 107, and an operation controller 110.
The fuel cell power generation system 100 operates based on power supplied from a commercial power source 150 which is a main power source for the entire system. It should be noted that the main power source is not necessarily a commercial power source, but may be a different type of power source. ON and OFF of the power supply from the main power source may be controlled by means of a main switch which is not shown.

The fuel cell stack 101 may be configured as any type of fuel cell stack. Specific examples of the fuel cell stack include a PEFC stack and an SOFC stack.

The measurement section 109 measures an accumulated energized period which is an accumulation of periods during which the power supply from the main power source is ON. The measurement section 109 includes, for example, a clock counter, a CPU, and a memory. The measurement section 109 measures and stores the accumulated energized period, and outputs the accumulated energized period to the calculation section 107 in response to a request from the calculation section 107.

The calendar section 104 has a clock function and a calendar function, and specifies a time and a date at which the power supply from the main power source is ON. The calendar section 104 includes, for example, a calendar circuit and a real time clock which are supplied with power from a battery 105. In response to a request from the calculation section 107, the calendar section 104 outputs the current time and date to the calculation section 107. The calendar section 104 manages times and dates by using the power supplied from the battery 105 regardless of whether the power supply from the main power source is ON or OFF.

The memory 106 stores a matrix (a table). In the matrix, time-of-year segments which are defined by dividing a one-year period are arranged in rows, and energized period segments which are defined by dividing a target value of the accumulated energized period are arranged in columns. The matrix stores, as elements, upper limit values of a power generation period per unit time of the fuel cell stack, and the upper limit values are set such that the sum of power generation periods calculated for all of the elements in the matrix coincides with a pre-measured life period of the fuel cell stack. The memory 106 is configured as, for example, a volatile memory or nonvolatile memory. In response to a request from the calculation section 107, the memory 106 outputs to the calculation section 107 an upper limit value of the power generation period per unit time that is stored in a specific row and column.

The calculation section 107 applies actual measurement data of the time and the date specified by the calendar section and actual measurement data of the accumulated energized period measured by the measurement section 109 to the matrix stored in the memory 106, and determines an upper limit value of the power generation period per unit time. The calculation section 107 includes, for example, a CPU and a memory.

The operation controller 110 sets, in consideration of at least a thermal demand from a demander, a plan for a power generation operation to be performed in each unit time within the range of the upper limit value of the power generation period per unit time, the upper limit value having been determined by the calculation section 107, and controls the power generation operation of the fuel cell stack based on the plan. The operation controller 110 may include, for example, a CPU and a memory.

The above configuration makes it possible to obtain sufficient durability that is required by the installation location and/or installation area of the system (e.g., 10-year durability) while addressing, at least, the thermal demand from the demander. In particular, the operation plan is set, in which the number of years elapsed after the start of usage of the system is reflected by using the accumulated energized period and environmental changes within a one-year period, for example, seasonal changes, are reflected by using a time and a date. This allows the fuel cell power generation system to continue to operate stably and efficiently.

The operation controller 110 determines a power generation start time and a power generation end time based on information from an input section 108, the calendar section 104, the measurement section 109, and the memory 106. Moreover, during the operation of the fuel cell power generation system 100, the operation controller 110 determines the amount of power to be generated (i.e., power generation amount) based on a power demand and a thermal demand. The operation controller 110 may control the operation of the fuel cell power generation system 100 based on the determined power generation start time, power generation end time, and power generation amount.

Assume a case where the calendar section 104, the memory 106, the calculation section 107, the measurement section 109, and the operation controller 110 include an arithmetic unit such as a CPU, MPU, PLC (Programmable Logic Controller), or logic circuit. In such a case, a single arithmetic unit may be shared by all of these sections, or may be provided for each section, or may be provided for each of any combinations of these sections.

Assume a case where the calendar section 104, the memory 106, the calculation section 107, the measurement section 109, and the operation controller 110 include a storage device such as a DRAM, flash memory, or hard disk. In such a case, a single storage device may be shared by all of these sections, or may be provided for each section, or may be provided for each of any combinations of these sections.

As shown in Fig. 1, the fuel cell power generation system 100 further includes an update section 111, the battery 105, the input section 108, a display 112, a power demand measurement section 102, and a thermal demand measurement section 103.

As one example, the update section 111 may be a rewrite processing section configured to rewrite, based on temperature information about the installation location, the upper limit values of the power generation period per unit time which are stored in the matrix. Assume a case where the fuel cell power generation system 100 prestores a plurality of matrices associated with temperature information about the installation location. In such a case, the update section 111 may be a selection processing section configured to make a selection from among the plurality of matrices, which are stored in the memory 106, based on the temperature information about the installation location. The rewrite processing section may be configured not only to change the upper limit values of the power generation period which are elements in the matrix, but also to change the manner of setting the time-of-year segments, for example, to set the spring segment to two months and the winter segment to four months, and to change the manner of setting the energized period segments.

The temperature information may contain at least one of the following pieces of information: installation location information prestored in the memory 106; average temperature information about the installation location; and temperature information detected by a temperature detector (not shown) configured to detect an ambient temperature of the installation location. The memory 106 storing the plurality of matrices may be configured either as a single memory 106 or as multiple memories 106. The update section 111 may include an input device, such as a touch panel or a key switch, a CPU, and a memory, for example.

The battery 105 may be configured as a dry cell or a secondary cell, for example. The input section 108 may be configured as an I/O circuit, for example.

The power demand measurement section 102 may be configured as, for example, a power meter which is provided at a connection between a power grid (i.e., the commercial power source) and a house where the fuel cell power generation system 100 is installed. The power demand measurement section 102 outputs, for example, a power demand in the house to the operation controller 110 via the input section 108.

The thermal demand measurement section 103 may be configured, for example, as a hot water meter which measures the amount of hot water consumed at the house where the fuel cell power generation system 100 is installed, or as a temperature sensor provided within a hot water tank (not shown) in which hot water directly or indirectly heated up by the fuel cell power generation system 100 is stored. The thermal demand measurement section 103 outputs, for example, a thermal demand in the house to the operation controller 110 via the input section 108.

The display 112 displays the time of a power generation operation performed within an actual unit time, the time being determined in the plan for the power generation operation, which plan is set by the operation controller 110. The display 112 may display the power generation start time, the power generation end time, and the current power generation amount, which are determined by the operation controller 110. The display 112 may be configured as a liquid crystal panel, for example.

Preferably, the memory 106, the calculation section 107, the measurement section 109, and the operation controller 110 are supplied with power from the commercial power source 150, and the calendar section 104 is supplied with power from a power supply unit that is independent of the commercial power source 150 and the fuel cell stack 101. In the present embodiment, the memory 106, the calculation section 107, the measurement section 109, the operation controller 110, the update section 111, the input section 108, the power demand measurement section 102, the thermal demand measurement section 103, and the display 112 operate based on power supplied from the commercial power source 150, and the calendar section 104 operates based on power supplied from the battery 105. According to this configuration, even if power is not supplied from the commercial power source and the fuel cell stack, the calendar section 104 can operate based on power supplied from the battery 105.

Next, a method for operating the fuel cell power generation system 100 according to the present embodiment is described.

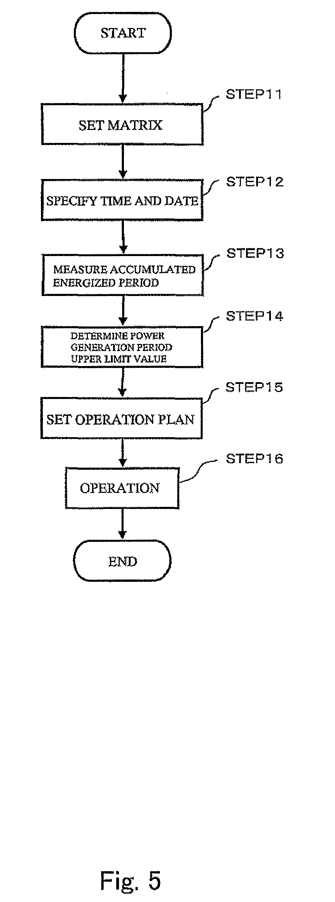

Fig. 5 is a flowchart showing an example of a method for operating the fuel cell power generation system according to Embodiment 1.

As illustratively shown in Fig. 5, the method for operating the fuel cell power generation system according to the present embodiment, in which the accumulated energized period is an accumulation of periods during which the power supply from the main power source is ON, includes: a step of dividing a one-year period to define time-of-year segments, dividing a target value of the accumulated energized period to define energized period segments, and presetting a matrix which is used for determining an upper limit value of a power generation period per unit time for each combination of the time-of-year segments and the energized period segments (STEP 11); a step of specifying a time and a date at which the power supply from the main power source is ON (STEP 12); a step of measuring the accumulated energized period (STEP 13); a step of determining to which time-of-year segment the specified time and date belong and to which energized period segment the measured accumulated energized period belongs, and based on results of the determination and the matrix, determining an upper limit value of the power generation period per unit time (STEP 14); a step of setting a plan for a power generation operation to be performed in each unit time within the range of the determined upper limit value of the power generation period per unit time (STEP 15); and a step of operating the fuel cell system based on the set plan (STEP 16).

The step of presetting the matrix (STEP 11) may be performed, for example, by storing the matrix in the memory 106 as factory setting before shipment of the fuel cell power generation system. Alternatively, if the fuel cell power generation system is already installed, this step may be performed by a user or maintenance staff using an input device, which is not shown, or using the update section 111.

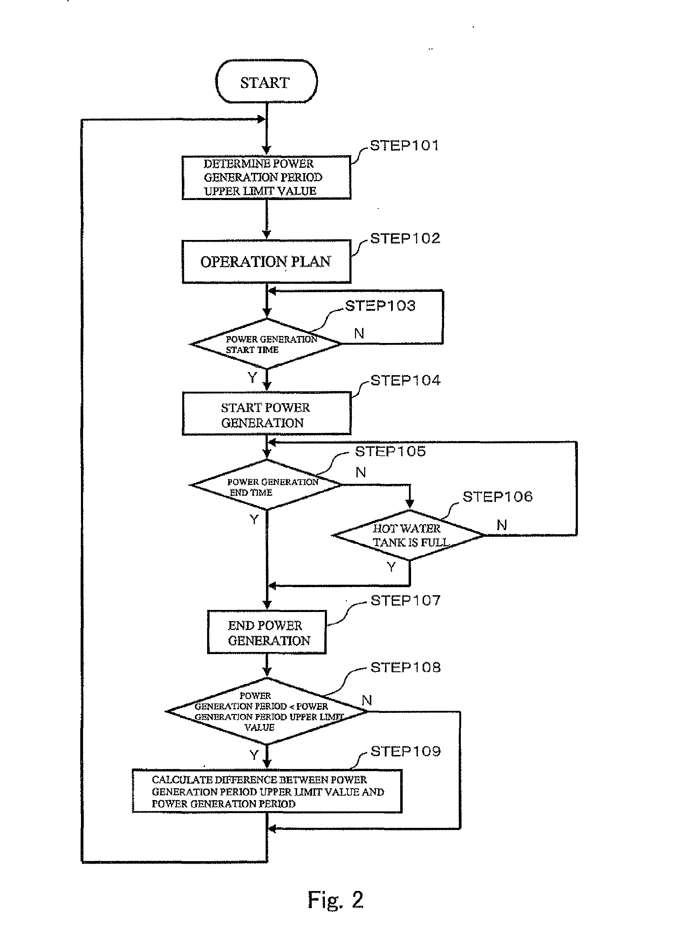

For example, STEP12 to STEP 14 may be the same as STEP 101 of Fig. 2, which will be described below.

For example, STEP 15 may be the same as STEP 102 of Fig. 2, which will be described below.

For example, STEP 16 may be the same as STEP 104 to STEP 107 of Fig. 2, which will be described below.

The fuel cell power generation system 100 utilizes power that is generated through an electrochemical reaction at the fuel cell stack 101, and also utilizes recovered heat, thereby realizing high energy efficiency. The operation controller 110 plans an operation of the fuel cell power generation system 100 for each predetermined unit time so that power generation will be performed in such a period as to realize power saving and economic efficiency. To plan an operation herein refers to, for example, determining a time point at which to start generating power and a time point at which to stop generating power. To plan an operation herein may additionally refer to determining the amounts of power to be generated in respective hours.

The predetermined unit time may be a day, for example. Alternatively, the predetermined unit time may be longer such as a week, 10 days, or a month. To be more specific, for example, daily data regarding a user's household power demand and thermal demand is collected, and based on the data, a period during which the demands are greatest is specified. Thereafter, a power generation start time and a power generation end time are calculated so that an optimal amount of hot water will be stored and an optimal amount of power will be generated during the specified period. While the fuel cell power generation system 100 is operating, the amounts of power to be generated in respective hours are calculated based on the power demand and thermal demand.

Since the fuel cell power generation system 100 operates in accordance with the operation plan, the fuel cell power generation system 100 supplies a sufficient amount of heat and a sufficient amount of generated power when the user's household power load and thermal load, that is, the thermal demand and power demand, are great. This makes it possible to reduce: generation of heat through gas combustion using a device different from the fuel cell power generation system 100 such as a water heater; and purchase of power from a power grid. This improves power saving and economic efficiency.

Assume a case where the fuel cell power generation system 100 operates in an optimal manner based on a regular household's power demand and thermal demand. In such a case, if the life of the fuel cell stack 101 is invariable, then its service life is approximately six to seven years. In order to realize a 10-year service life, it is necessary to set upper limit values of the power generation period per unit time and to operate the fuel cell power generation system 100 within the range of the upper limit values.

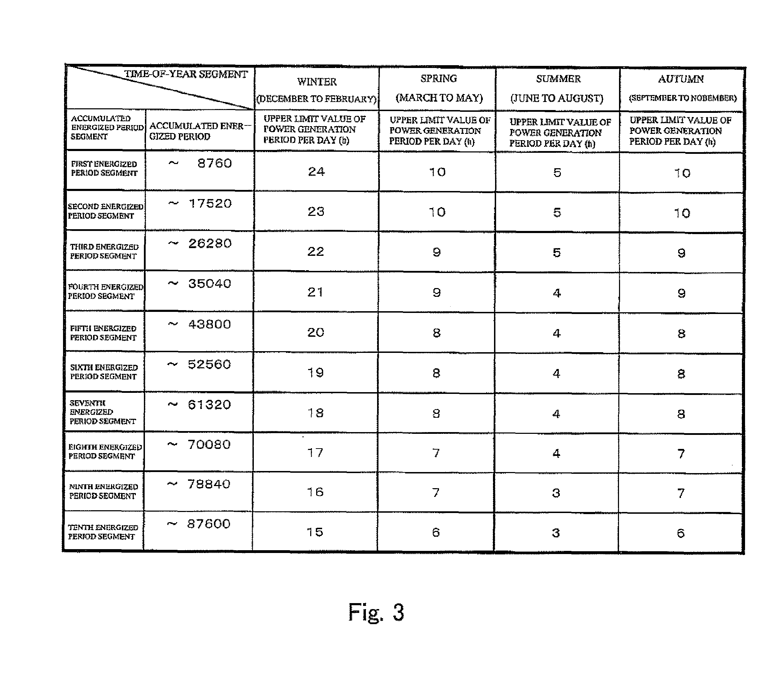

Fig. 2 is a flowchart showing an example of the method for operating the fuel cell power generation system according to Embodiment 1. Fig. 3 is an example of a matrix for the power generation period per unit time of the fuel cell power generation system according to Embodiment 1. Hereinafter, the method for operating the fuel cell power generation system 100 is described with reference to Fig. 2 and Fig. 3.

First, the calculation section 107 determines an upper limit value of the power generation period per unit time (STEP 101). The upper limit value is set based on the matrix stored in the memory 106.

As illustratively shown in Fig. 3, in the matrix, time-of-year segments which are defined by dividing a one-year period are arranged in rows, and energized period segments which are defined by dividing a target value of the accumulated energized period are arranged in columns. The matrix stores, as elements, upper limit values of the power generation period per unit time of the fuel cell stack, and the upper limit values are set such that the sum of power generation periods calculated for all of the elements in the matrix coincides with a pre-measured life period of the fuel cell stack.
A specific description is given below with reference to the example shown in Fig. 3. In the four time-of-year segments, the number of days of the winter segment (December to February) is 90 days, the number of days of the spring segment (March to May) is 92 days, the number of days of the summer segment (June to August) is 92 days, and the number of days of the autumn segment (September to November) is 91 days. In the matrix, the sum of each of all the elements (e.g., the element in the winter segment and the first energized period segment is 24 hours) multiplied by the number of days of the corresponding time-of-year segment is 36328 hours. This is the life period of the fuel cell stack. It should be noted that the "pre-measured life period of the fuel cell stack" refers to, for example, a life period which is determined upon designing of the fuel cell stack, and need not be precisely measured. The life period may be an approximate figure.

Preferably, the elements in the matrix are set in the manner described below.

It is preferred to perform the setting with respect to the rows such that, in the same energized period segment, the higher the thermal demand in a time-of-year segment (one example of a time-of-year segment in which the thermal demand is high is the winter segment [e.g., December to February]), the greater the upper limit value of the power generation period per unit time of the fuel cell stack 101 in the time-of-year segment. Alternatively, it is preferred to perform the setting such that, in the same energized period segment, the lower an average daily temperature in a time-of-year segment relative to the other time-of-year segments within a one-year period (one example of a time-of-year segment in which an average daily temperature is low is the winter segment [e.g., December to February]), the greater the upper limit value of the power generation period per unit time of the fuel cell stack 101 in the time-of-year segment.

Since there is less thermal demand in summer, even if heat is stored in hot water, a large portion of the heat is wasted. In contrast, the amount of such wasted heat decreases in winter since there is a large thermal demand in winter. In order to improve power saving, it is preferred that the upper limit values of the power generation period per unit time are set such that the less the thermal demand in a season (i.e., summer), the shorter the power generation period in the season, and the more the thermal demand in a season (i.e., winter), the longer the power generation period in the season.

Although in the example shown in Fig. 3 the one-year period is divided into four time-of-year segments based on four seasons, the one-year period may be alternatively divided into three time-of-year segments, i.e., the winter segment, the summer segment, and an intermediate time-of-year segment which is a combination of the spring segment and the autumn segment. Further alternatively, the one-year period may be divided based on weeks (into 52 time-of-year segments) or based on months (into 12 time-of-year segments). Further alternatively, an average temperature distribution that indicates the surrounding environment of the installation location of the system may be obtained beforehand, and the one-year period may be divided into a plurality of time-of-year segments based on the average temperature distribution. Then, upper limit values of the power generation period per unit time may be set for the respective time-of-year segments such that the higher the average temperature, the shorter the power generation period, and the lower the average temperature, the longer the power generation period.

It is preferred to perform the setting with respect to the columns such that, in the same time-of-year segment, the longer the accumulated energized period, the less the upper limit value of the power generation period per unit time of the fuel cell stack 101.

One well known characteristic of the fuel cell power generation system 100 is that its exhaust heat recovery efficiency improves in accordance with an increase in the total power generation period. Accordingly, a balance between the thermal demand and the supply of heat can be suitably kept by performing the setting such that in the same time-of-year segment, the longer the accumulated energized period, the less the upper limit value of the power generation period per unit time.

In the example of Fig. 3, the energization durable period of the fuel cell power generation system 100 is set as the upper limit of the accumulated energized period, and a target value of the accumulated energized period (ten years = 87600 hours) is divided into ten energized period segments, such that each segment of the accumulated energized period is equivalent to one year (365 days × 24 hours = 8760 hours).

It should be noted that if the power generation efficiency improves and the exhaust heat recovery efficiency decreases in accordance with an increase in the total power generation period, then the setting may be performed such that, in the same time-of-year segment, the longer the accumulated energized period, the greater the upper limit value of the power generation period per unit time. The target value of the accumulated energized period is ten years and the target value is equally divided into ten segments which are one-year energized period segments. However, in consideration of the system characteristics and thermal demand, in the same time-of-year segment, the target value of the accumulated energized period may be divided more finely or more roughly, and also unequally, so that a balance between the thermal demand and the supply of heat can be kept.

The matrix shown in Fig. 3 is set in accordance with general seasons in Japan. Over a period of one year, there are significant climate differences from region to region. For example, in Japan, there are significant climate differences between northern Japan and southern Japan, and also globally, there are significant climate differences between the northern hemisphere and the southern hemisphere. Moreover, life style varies from region to region. Accordingly, the thermal demand significantly varies depending on the installation environment of the fuel cell power generation system 100. Therefore, it is desired that a matrix that accords with the installation environment is created and the matrix, which is stored in the memory 106, is automatically or manually updated by using the update section 111. It should be noted that the automatically performed update herein includes the following: creating a matrix from an average temperature distribution that is inputted beforehand, or from an average temperature distribution that is created based on time and date information from the calendar section 104 and based on a temperature sensor configured to measure an ambient temperature; and performing the matrix update by using the created matrix.

In STEP 101, the operation controller 110 applies actual measurement data of the time and the date specified by the calendar section 104 and actual measurement data of the accumulated energized period measured by the measurement section 109 into the matrix stored in the memory 106 (see Fig. 3, for example), thereby determining an upper limit value of the power generation period per unit time.

For example, if the actual measurement data of the time and the date indicates February 24th (time-of-year segment = winter), and the actual measurement data of the accumulated energized period indicates 3000 hours (the first energized period segment), then the upper limit value of the power generation period per unit time is set to 24 hours.

Assume, for example, a case where the time and the date indicate March 1st and the accumulated energized period is 3100 hours. In this case, if the user turns off the main switch of the fuel cell power generation system 100 since the user goes out for a long period of time and then turns on the main switch again on June 1 st of the next year, the operation controller 110 sets an upper limit value of the power generation period per unit time to 10 hours based on actual measurement data of a time and a date indicating June 1st and actual measurement data of the accumulated energized period indicating 3100 hours.

Thus, an actual measurement value of a time and a date, which value does not depend on ON/OFF of the power supply from the main power source, is used to specify a column of the matrix, and an actual measurement value of the accumulated energized period, which value depends on ON/OFF of the power supply from the main power source, is used to specify a row of the matrix. In this manner, an upper limit value of the power generation period per unit time can be set properly, which facilitates the realization of extending the life (i.e., maintaining a state of being able to generate power) of the fuel cell power generation system 100 to reach the target value of the accumulated energized period.

When STEP 101 is completed, the operation controller 110 creates an operation plan (STEP 102). For example, the operation plan is created in the following manner: based on past operation histories stored in the operation controller 110, the operation controller 110 predicts a time in which a power demand and a thermal demand occur; and based on the prediction, the operation controller 110 determines a power generation start time and a power generation end time of the fuel cell power generation system 100 such that the power generation period becomes less than or equal to the upper limit value of the power generation period per unit time. At this time, the display 112 may display the power generation start time and/or the power generation end time. This allows the user to confirm the operation status of the system. Moreover, energy efficiency can be further improved if the user concentrates times of using power and heat (hot water) into the operating period of the fuel cell power generation system 100. It should be noted that the operation plan need not take a power demand into consideration, so long as the operation plan is set by taking, at least, a thermal demand into consideration.

When the operation plan is created, the operation controller 110 starts, based on the operation plan, power generation of the fuel cell power generation system 100 at the power generation start time (STEP 103, 104). The power generation by the fuel cell power generation system 100 need not be exactly based on the operation plan, but may be performed in a manner to provide optimal outputs in response to actual power and thermal demands.

During the operation of the fuel cell power generation system 100, when the power generation end time has arrived, or when the amount of heat stored in the hot water tank (not shown), which is configured to store heat generated during the operation, has reached its upper limit value, the operation controller 110 ends the power generation (STEP 105 to 107).

After the end of power generation of the fuel cell power generation system 100, the operation controller 110 determines whether the period of the power generation is less than the upper limit value of the power generation period per unit time (STEP 108). If the period of the power generation is not less than the upper limit value of the power generation period per unit time, then the operation controller 110 returns to the step in which to set an upper limit value of the power generation period per unit time (STEP 101), and repeats the above-described steps.

If the period of the power generation is less than the upper limit value of the power generation period per unit time, the operation controller 110 calculates the difference between the upper limit value of the power generation period per unit time and the actual period of the power generation (STEP 109). Then, returning to the above-described steps, when setting the next upper limit value of the power generation period per unit time (STEP 101), the operation controller 110 adds the difference calculated in STEP 109 to the next upper limit value.

### [Variations]

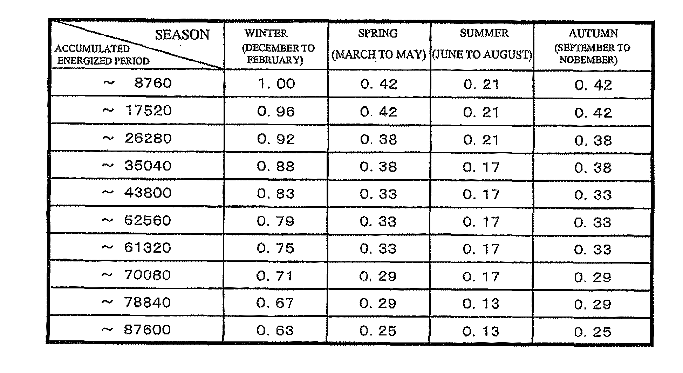

The above description shows an example where the matrix as shown in Fig. 3, which directly stores the upper limit values of the power generation period per unit time, is used. However, as shown in Fig. 4, the matrix may alternatively contain the ratios of the respective upper limit values of the power generation period per unit time to the unit time (e.g., if the unit time is a day, the unit time is 24 hours) (here, the ratios are contained as coefficients: for example, if the unit time is 24 hours and an upper limit value is 6 hours, the ratio of the upper limit value is 6/24 = 25 %). In this case, the operation controller 110 may determine an upper limit value of the power generation period per unit time by performing a calculation of multiplying the unit time by a ratio.

That is, the feature of the matrix, "stores, as elements, upper limit values of a power generation period per unit time of the fuel cell stack", refers not only to a case where the matrix directly stores the upper limit values, but also to a case where the matrix stores different information that is used for obtaining the upper limit values.

Further, in the present embodiment, the power generation start time and the power generation end time are set based on a power demand and a thermal demand, and the fuel cell power generation system 100 operates in accordance with the power generation start time and the power generation end time. However, in order to simplify the control over the operation, the fuel cell power generation system 100 may start operating at a power generation start time that is determined in advance, and the operation may be ended when a time period that is equivalent to the upper limit value of the power generation period per unit time has elapsed since the power generation start time.

In the above description, the calendar section 104 manages times and dates without depending on ON/OFF of the power supply from the main power source of the fuel cell power generation system 100 since the calendar section 104 is supplied with power from the battery 105. However, as an alternative, the calendar section 104 may obtain or manage times and dates by using an atomic clock or communications, without depending on ON/OFF of the power supply from the main power source of the fuel cell power generation system 100.

Based on actual measurement data of the time and the date specified by the calendar section 104 and actual measurement data of the accumulated energized period measured by the measurement section 109, an upper limit value of the power generation period per unit time is determined with reference to stored contents in the memory 106. A power generation plan is set within the range of the upper limit value, and the power generation operation of the fuel cell power generation system 100 is performed, accordingly. This facilitates the realization of extending the life (i.e., maintaining a state of being able to generate power) of the fuel cell power generation system 100 to reach the target value of the accumulated energized period, without depending on ON/OFF of the power supply from the main power source of the fuel cell power generation system 100.

Assume a case where in the same time-of-year segment, the longer the accumulated energized period, the less the upper limit value of the power generation period per unit time stored in the memory 106. In this case, an upper limit value of the power generation period is determined in accordance with a change in exhaust heat recovery efficiency, the change corresponding to the total power generation period, so as not to cause oversupply of heat. This makes it possible to keep a balance between a thermal demand and supply of heat, thereby realizing efficient operation.

If, in the same energized period segment, the higher the expected thermal demand in a time-of-year segment within a one-year period, the greater the upper limit value of the power generation period per unit time stored in the memory 106 for the time-of-year segment, then heat can be supplied in good balance with the thermal demand. This realizes efficient operation.

If, in the same energized period segment, the lower the average daily temperature in a time-of-year segment, the greater the upper limit value of the power generation period per unit time stored in the memory 106 for the time-of-year segment, then heat can be supplied in good balance with the thermal demand. This realizes efficient operation.

If the fuel cell power generation system 100 includes the update section 111 (i.e., rewrite processing section or selection processing section) configured to update the upper limit values, stored in the memory 106, of the power generation period per unit time for the respective time-of-year segments and energized period segments, then information suitable for the installation environment of the fuel cell power generation system 100 can be stored in the memory 106. This realizes efficient operation.

If the fuel cell power generation system 100 includes the display 112 configured to display the time of a power generation operation performed within an actual unit time, the time being determined in the plan for the power generation operation, which plan is set by the operation controller 110, then the user can confirm the operation status of the fuel cell power generation system 100, which varies from day to day, hour to hour.

### Industrial Applicability

As described above, the fuel cell power generation system according to the present invention is useful since the fuel cell power generation system is capable of providing sufficient durability that is required by the installation location and/or installation area of the system (e.g., 10-year durability) while addressing, at least, a thermal demand from a demander.

### Reference Signs List

- 100: fuel cell power generation system
- 101: fuel cell stack
- 102: power demand measurement section
- 103: thermal demand measurement section
- 104: calendar section
- 105: battery
- 106: memory
- 107: calculation section
- 108: input section
- 109: measurement section
- 110: operation controller
- 111: update section
- 112: display
- 150: commercial power source

## Claims

1. A fuel cell power generation system which includes a fuel cell stack configured to generate power and which operates based on power supplied from a main power source for the entire system, the fuel cell power generation system comprising:
a measurement section configured to measure an accumulated energized period which is an accumulation of periods during which the power supply from the main power source is ON;
a calendar section, having a clock function and a calendar function, configured to specify a time and a date at which the power supply from the main power source is ON;
a memory having stored therein a matrix in which time-of-year segments which are defined by dividing a one-year period are arranged in rows, and energized period segments which are defined by dividing a target value of the accumulated energized period are arranged in columns, wherein the matrix stores, as elements, upper limit values of a power generation period per unit time of the fuel cell stack, and the upper limit values are set such that the sum of power generation periods calculated for all of the elements in the matrix coincides with a pre-measured life period of the fuel cell stack;
a calculation section configured to apply actual measurement data of the time and the date specified by the calendar section and actual measurement data of the accumulated energized period measured by the measurement section to the matrix, and to determine an upper limit value of the power generation period per unit time; and
an operation controller configured to set, in consideration of at least a thermal demand from a demander, a plan for a power generation operation to be performed in each unit time within the range of the upper limit value of the power generation period per unit time, the upper limit value having been determined by the calculation section, and to control the power generation operation of the fuel cell stack based on the plan.

2. The fuel cell power generation system according to claim 1, wherein the upper limit values of the power generation period per unit time are set such that the longer the accumulated energized period, the less the upper limit values of the power generation period per unit time.

3. The fuel cell power generation system according to claim 1 or claim 2, wherein the upper limit values of the power generation period per unit time are set such that the higher the thermal demand in a time-of-year segment within the one-year period, the greater the upper limit value of the power generation period per unit time in the time-of-year segment.

4. The fuel cell power generation system according to claim 1 or claim 2, wherein the upper limit values of the power generation period per unit time are set such that the lower an average daily temperature in a time-of-year segment relative to the other time-of-year segments within the one-year period, the greater the upper limit value of the power generation period per unit time in the time-of-year segment.

5. The fuel cell power generation system according to any one of claims 1 to 4, comprising a rewrite processing section configured to rewrite, based on temperature information about an installation location of the fuel cell power generation system, the upper limit values of the power generation period per unit time which are stored in the matrix.

6. The fuel cell power generation system according to any one of claims 1 to 4, comprising:
a plurality of prestored matrices associated with temperature information about an installation location of the fuel cell power generation system; and
a selection processing section configured to make a selection from among the plurality of matrices, which are stored in the memory, based on the temperature information about the installation location.

7. The fuel cell power generation system according to claim 5 or claim 6, wherein
the temperature information contains at least one of the following pieces of information: installation location information prestored in the memory; average temperature information about the installation location; and temperature information detected by a temperature detector configured to detect an ambient temperature of the installation location.

8. The fuel cell power generation system according to any one of claims 1 to 7, comprising a display configured to display a time of a power generation operation performed within an actual unit time, the time being determined in the plan for the power generation operation, which plan is set by the operation controller.

9. The fuel cell power generation system according to any one of claims 1 to 8, wherein
the measurement section, the memory, and the operation controller are configured to be supplied with power from a commercial power source, and
the calendar section is configured to be supplied with power from a power supply unit that is independent of the commercial power source and the fuel cell stack.

10. A method for operating a fuel cell power generation system, in which an accumulated energized period is an accumulation of periods during which power supply from a main power source is ON, comprising the steps of:
dividing a one-year period to define time-of-year segments, dividing a target value of the accumulated energized period to define energized period segments, and presetting a matrix which is used for determining an upper limit value of a power generation period per unit time for each combination of the time-of-year segments and the energized period segments;
specifying a time and a date at which the power supply from the main power source is ON;
measuring the accumulated energized period;
determining to which time-of-year segment the specified time and date belong and to which energized period segment the measured accumulated energized period belongs, and based on results of the determination and the matrix, determining an upper limit value of the power generation period per unit time;
setting a plan for a power generation operation to be performed in each unit time within the range of the determined upper limit value of the power generation period per unit time; and
operating the fuel cell system based on the set plan.
